# EUROPEAN PATENT APPLICATION

(11) **EP 1 840 912 A2**
(43) Date of publication of application: **03.10.2007**
(21) Application number: 07104874.8
(22) Date of filing: 26.03.2007
(51) Int. Cl.: H01G 4/12, H01G 4/30

(54) **Multilayer ceramic electronic device and method of production of same**

(30) Priority: 28.03.2006 JP 2006089083
(71) Applicant: TDK Corporation, Tokyo 103-8272 (JP)
(72) Inventor: Fujimura, Tomoyoshi, Tokyo Tokyo 103-8272 (JP); Sato, Akira, Tokyo Tokyo 103-8272 (JP)
(74) Representative: Vossius & Partner

(57) **Abstract**

An object of the present invention is to provide a method of production of a multilayer ceramic electronic device able to prevent the multilayer ceramic electronic device from dropping in mechanical strength and causing structural defects such as cracks at a low cost even if annealing the sintered body for reoxidation, and also such a multilayer ceramic electronic device, i.e., a method of production of a multilayer ceramic electronic device including a step of stacking green sheets and internal electrode layers to obtain a green chip, a step of firing the green chip under a reducing atmosphere to obtain a sintered body, and a reoxidation step of annealing the sintered body in a predetermined annealing atmosphere gas, wherein the annealing atmosphere gas in the reoxidation step has a dew point of -50 to 0°C, and the annealing atmosphere gas in the reoxidation step has a temperature of 900 to 1100°C.

## Description

The present invention relates to a method of production of a multilayer ceramic electronic device such as multilayer ceramic capacitor and a multilayer ceramic electronic device.

A multilayer ceramic capacitor, one example of a multilayer ceramic electronic device, is comprised of a capacitor device body configured by dielectric layers comprised of a dielectric ceramic composition of a predetermined composition and internal electrode layers having various metals as main ingredients alternately stacked. This type of multilayer ceramic capacitor is usually formed by printing an internal electrode paste on a ceramic green sheet comprised of a dielectric ceramic composition, stacking a plurality of green sheets on which internal electrode paste has been printed, cutting the stack of the ceramic green sheets into predetermined dimensions to obtain a ceramic green chip, treating it to remove the binder, firing it to obtain a sintered body, and forming external electrodes.

In recent years, as the materials forming the internal electrode layers, Pt, Pd, and other expensive precious metals have been replaced by the use of Ni and other inexpensive base metals thereby realizing a large reduction in costs. When using a base metal for the internal electrode layers, to metallize the internal electrode layers without oxidation, a green chip has to be fired in a reducing atmosphere.

However, if firing a green chip in a reducing atmosphere, the dielectric layers are reduced to be converted into a semiconductor, and the dielectric property of the dielectric layer is liable to be lost. Therefore, in the past, a green chip has been fired in a reducing atmosphere to obtain a sintered body, then the dielectric layers in the sintered body have been annealed for reoxidation.

In the past, the annealing for reoxidation of the dielectric layers is performed under an atmosphere of a wetted gas (for example, N₂) . Under this atmosphere, a disassociation reaction of water occurs, and as a result, oxygen is produced. This oxygen causes the dielectric layers to reoxidize. However, in conventional annealing, the annealing atmosphere gas cannot be suitably controlled in oxygen partial pressure and temperature, the multilayer ceramic capacitor becomes weak in mechanical strength, and the multilayer ceramic capacitor suffers from structural defects such as cracks.

For example, if the annealing atmosphere gas is too high in oxygen partial pressure, the sintered body is annealed under a strong oxidizing atmosphere. As a result, the base metal in the internal electrode layers ends up oxidizing. For example, the Ni in the internal electrode layer oxidizes to produce NiO. The oxidation of the base metal in the internal electrode layers causes the internal electrode layers to expand in volume to result in reducing mechanical strength of the multilayer ceramic capacitor and forming cracks. Conversely, if the annealing atmosphere gas is too low in oxygen partial pressure, the dielectric layers are liable to be insufficiently reoxidized.

Further, if the annealing atmosphere gas is too high in temperature, the dielectric layers are reoxidized well, but the internal electrode layers as well end up being oxidized and cracks are liable to occur. Conversely, if the annealing atmosphere gas is too low in temperature, the dielectric layers are liable to be insufficiently reoxidized.

A method for raising the multilayer ceramic capacitor in mechanical strength to prevent the formation of cracks includes raising the firing temperature of the green chip. However, raising the firing temperature may cause problems of a change in the IR life or temperature characteristic of the capacitor.

Further, as shown in Japanese Patent Publication (A) No. 10-92686, as the method of raising the multilayer ceramic capacitor in strength to prevent the formation of cracks, it has been proposed to anneal the sintered body under a high pressure atmosphere. However, in this method, expensive facilities are necessary for annealing under a high pressure of 100 to 1000 atmospheres.

The present invention was made in consideration of this actual situation and has as its object to provide a method of production of a multilayer ceramic electronic device able to prevent the multilayer ceramic electronic device from dropping in mechanical strength and from causing structural defects such as cracks at a low cost even if annealing the sintered body for reoxidation and such a multilayer ceramic electronic device.

To achieve the above object, a method of production of a multilayer ceramic electronic device according to the present invention comprises a step of stacking green sheets and internal electrode layers to obtain a green chip, a step of firing the green chip under a reducing atmosphere to obtain a sintered body, and a reoxidation step of annealing the sintered body in a predetermined annealing atmosphere gas, wherein the annealing atmosphere gas in the reoxidation step has a dew point of -50 to 0°C, and the annealing atmosphere gas in the reoxidation step has a temperature of 900 to 1100°C.

By making the dew point of the annealing atmosphere gas in the reoxidation step -50 to 0°C and making the temperature of the annealing atmosphere gas in the reoxidation step 900 to 1100°C, it is possible to control the oxygen partial pressure in the annealing atmosphere gas to within a predetermined range. By annealing the sintered body in the range of this oxygen partial pressure for reoxidation, it is possible to prevent the multilayer ceramic capacitor from dropping in mechanical strength and causing structural defects such as cracks. Further, as control of the dew point and temperature of the annealing atmosphere gas is simple, compared with annealing under a high pressure atmosphere, it is possible to prevent the multilayer ceramic capacitor from dropping in mechanical strength and causing structural defects such as cracks by a lower cost.

Preferably, the annealing atmosphere gas includes N₂ and H₂O.

By adjusting the ratio of mixture of N₂ and H₂O in the annealing atmosphere gas, it is possible to easily control the oxygen partial pressure in the annealing atmosphere gas. As a result, compared with annealing under a high pressure atmosphere, it is possible to prevent the multilayer ceramic capacitor from dropping in mechanical strength at a low cost and possible to prevent structural defects such as cracks.

The multilayer ceramic electronic device according to the present invention is produced using this method of production.

Further, the multilayer ceramic electronic device according to the present invention is a multilayer ceramic electronic device having a stack part comprising inner dielectric layers and internal electrode layers stacked together and outer dielectric layers sandwiching the two sides of the stack part in the stacking direction, wherein the amount of Si existing (atomic%) at an interface between the dielectric layer and the internal electrode layer positioned at the outer most side of the stack part is 0.5 to less than 2 times the amount of Si existing (atomic %) at an interface between the inner dielectric layer and the internal electrode layer.

By making the amount of Si existing at the outer layer side 0.5 to less than 2 times the amount of Si existing at the inner side, it is possible to improve the multilayer ceramic electronic device in mechanical strength and prevent structural defects such as cracks .

Preferably, the internal electrode layers include a base metal.

When using Ni or another inexpensive base metal for the internal electrode layers, to metallize the internal electrode layers without causing oxidation, the green chip is fired in a reducing atmosphere. When annealing to reoxidize the dielectric layers reduced by this firing, it is possible to prevent the multilayer ceramic capacitor from dropping in mechanical strength and structural defects such as cracks from being formed at a low cost by controlling the dew point and temperature of the annealing atmosphere gas within the above ranges .

These and other objects and features of the present invention will become clearer from the following description of the preferred embodiments given with reference to the attached drawings, wherein:
FIG. 1 is a schematic cross-sectional view of a multilayer ceramic capacitor according to an embodiment of the present invention,
FIG. 2 is a schematic view of a system (wetter) for controlling the dew point of an annealing atmosphere gas at the time of the reoxidation step of a sintered body in the method of production of a multilayer ceramic electronic device according to an embodiment of the present invention,
FIG. 3 is an enlarged view of an overlapped edge part II of internal electrodes in FIG. 1,
FIG. 4 is an electron microscope (TEM) photograph of an interface of an outer dielectric layer and an internal electrode layer positioned at the outer most layer side in the stack part and an interface of an inner dielectric layer and an internal electrode layer in the cross-section of a multilayer ceramic capacitor according to an embodiment of the present invention, and
FIG. 5 is an electron microscope (TEM) photograph of an interface of an outer dielectric layer and an internal electrode layer positioned at the outer most layer side in the stack and an interface of an inner dielectric layer and an internal electrode layer in the cross-section of a multilayer ceramic capacitor according to a comparative example of the present invention.

Preferred embodiments of the present invention will be described in detail below while referring to the attached figures.

### Structure of Multilayer Ceramic Capacitor

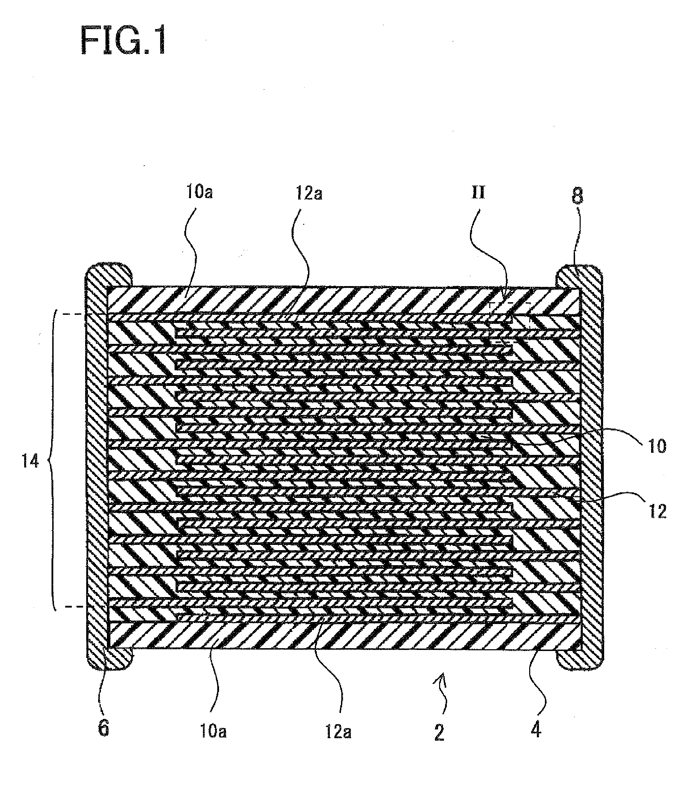

As shown in FIG. 1, in a multilayer ceramic capacitor 2 according to an embodiment of the present invention, a stack part 14 comprised of alternant stack of inner dielectric layers 10 and internal electrode layers 12 is sandwiched between outer dielectric layers 10a at the two sides in the stacking direction (end faces) whereby a capacitor device body 4 is formed. At the both ends of the capacitor device body 4, a pair of external electrodes 6 and 8 is formed, each of which is connected with the alternately arranged internal electrode layers 12 inside the device body 4. The capacitor device body 4 is not particularly limited in shape, but usually is made a rectangular parallelepiped. Further, it is not particularly limited in dimensions and may be made suitable dimensions in accordance with the application, but is usually 0.4 to 5.6 mm × 0.2 to 5.0 mm × 0.2 to 1.9 mm.

The internal electrode layers 12 are stacked so that their end faces are alternately exposed at the surfaces of the two facing ends of the capacitor device body 4. The pair of external electrodes 6 and 8 is formed at the two ends of the capacitor device body 4 and are connected to the exposed end faces of the alternately arranged internal electrode layer 12 to form a capacitor circuit.

The inner dielectric layers 10 are not particularly limited in thickness, but usually are 0.5 to 5.0 µm or so.

The internal electrode layers 12 are not particularly limited in thickness, but are usually 0.1 to 2.0 µm or so. The internal electrode layers 12 may be formed in a single layer or may be formed in a multiple layers of different compositions.

Next, a method of production of a multilayer ceramic capacitor 2 according to an embodiment of the present invention will be explained.

### Method of Production of Ceramic Green Sheet

The ceramic green sheets forming the inner dielectric layers 10 and outer dielectric layers 10a shown in FIG. 1 are produced.

First, a ceramic powder is prepared. The ceramic powder includes as materials calcium titanate, strontium titanate, barium titanate, or another main ingredient plus an alkali earth metal, a transition metal, a rare earth element, glass composition, or other sub ingredients.

Note that the materials of the ceramic powder may be mixed in advance by a ball mill etc., and then dried to form a powder followed by calcination. Then, the calcined material may be coarsely pulverized to obtain a ceramic powder. Further, to form a thin ceramic green sheet, it is preferable to use a ceramic powder of a particle size smaller than the thickness of the ceramic green sheet.

Next, the ceramic powder, a solvent, a dispersant, a plasticizer, a binder, and other ingredients are mixed by a ball mill, beads mill, etc., and dispersed to obtain a ceramic slurry.

The solvent is not particularly limited, but glycols, alcohols, ketones, esters, aromatics, etc. may be illustrated.

The dispersant is not particularly limited, but a maleic acid-based dispersant, polyethylene glycol-based dispersant, or allyl ether copolymer dispersant may be illustrated.

The plasticizer is not particularly limited, but a phthalic acid ester, adipic acid, phosphoric acid ester, glycols, etc. may be illustrated.

The binder is not particularly limited, but an acryl resin, polyvinyl butyral resin, polyvinyl acetal resin, ethyl cellulose resin, etc. may be illustrated.

Next, the ceramic slurry is formed into a sheet by the doctor blade method or die coater method etc. on a carrier film (support sheet) to obtain a ceramic green sheet. The ceramic green sheet is not particularly limited in thickness, but is preferably 0.5 to 5.0 µm. If the ceramic green sheet is too thick, the obtained capacity becomes small, which is not suitable for increasing the capacity. On the other hand, if too thin, it is difficult to form uniform dielectric layers causing that the problem of frequent short-circuits easily arises.

The carrier film is not particularly limited in material so long as it has a suitable flexibility at the time of peeling and rigidity as a support, but usually a polyester film such as a polyethylene terephthalate (PET) is preferably used. The carrier film is not particularly limited in thickness, but is preferably 5 to 100 µm thick.

### Method of Production of Internal Electrode Layer Paste

The internal electrode layer paste forming the internal electrode layers 12 shown in FIG. 1 is produced.

First, a conductive powder, a solvent, a dispersant, a plasticizer, a binder, an additive powder, etc. are mixed by a ball mill etc. to make a slurry and thereby obtain an internal electrode layer paste.

In the present embodiment, the internal electrode layers preferably include a base metal. The material, that is, conductive powder, of the internal electrode layers is not particularly limited, but is preferably a base metal Ni or Ni alloy. As the Ni alloy, an alloy of at least one type of element or more of Mn, Cr, Co, Al, Ru, Rh, Ta, Re, Os, Ir, Pt, W, etc. and Ni may be illustrated. The content of Ni in this alloy is usually 95 wt% or more. Note that the Ni or Ni alloy may contain various trace ingredients of P, C, Nb, Fe, Cl, B, Li, Na, K, F, S, etc. in amounts of 0.1 wt% or less. Further, as the conductive powder, a mixture of Ni or Ni alloy and Cu or Cu alloy, etc. is used.

The solvent is not particularly limited, but terpineol, butyl carbitol, kerosene, acetone, isobornyl acetate, etc. may be illustrated.

The dispersant is not particularly limited, but a maleic acid based dispersant, polyethylene glycol-based dispersant, allyl ether copolymer dispersant may be illustrated.

The plasticizer is not particularly limited, but a phthalic acid ester, adipic acid, phosphoric acid ester, glycol, etc. may be illustrated.

The binder is not particularly limited, but an acryl resin, polyvinyl butyral resin, polyvinyl acetal resin, ethyl cellulose resin, etc. may be illustrated.

As an additive powder, a compound of the same composition as the ceramic powder in the green sheet is included as a co-material. The co-material inhibits the sintering of the conductor powder in the firing process.

### Formation of Internal Electrode Patterns

The surface of the ceramic green sheet formed on the carrier film is formed with internal electrode patterns comprised of internal electrode layers 12 and 12a. The method of formation of the internal electrode patterns is not particularly limited so long as it is a method able to uniformly form internal electrode patterns, but the screen printing method, transfer method, etc. may be used.

The internal electrode patterns are not particularly limited in thickness, but are preferably 0.1 to 2.0 µm. If the internal electrode patterns are too thick, the number stacked has to be reduced and the obtained capacity becomes smaller, so increase of the capacity becomes difficult. Further, at the time of stacking, the step difference between the parts printed with the internal electrode patterns and the unprinted margin parts becomes too large, and short-circuit defects easily occur. On the other hand, if too thin, formation of uniform internal electrode layers becomes difficult and electrode disconnection easily occurs. The internal electrode patterns have an area of usually 10% or more of the area of the ceramic green sheet, preferably 30% or more, and not more than 90%. If the area is too small, the obtained capacity becomes small, and there is no longer any meaning to reducing the thickness.

To eliminate the step difference between the parts printed with the internal electrode patterns and the unprinted margin parts, the margin parts not printed with the internal electrode patterns may be formed with margin pattern layers. Normally, the margin pattern layers are comprised of ingredients similar to the dielectric layers.

### Formation of Capacitor Device Body

### (Formation of Green Chip)

First, the internal electrode layer paste (and margin pattern layers) is printed on the green sheet to obtain an internal layer stack units. Further, external layer stack units are obtained from a green sheet on which internal electrode layer paste is not printed.

Next, the internal layer stack units and the external layer stack units are stacked to obtain the structure as shown in FIG. 1 of a stack part 14 sandwiched at its two sides with outer dielectric layers 10a.

Next, the stack is cut to predetermined dimensions to obtain a green chip.

### (Treatment to Remove Binder of Green Chip)

Next, the green chip is treated to remove the binder. The treatment to remove the binder may be performed under ordinary conditions, but when using Ni, a Ni alloy or another base metal for the conductor material of the internal electrode layers, it is particularly preferable to perform this under the following conditions:
Atmosphere: Wet mixed gas of N₂ and H₂
Holding temperature: 200 to 400°C,
Holding time: 0.5 to 20 hours
Rate of temperature rise: 5 to 300°C/hour

### (Firing of Green Chip)

Next, the green chip is fired to obtain a sintered body. The firing conditions are preferably the following conditions.
Holding temperature: 1100 to 1300°C
Holding time: 0.5 to 8 hours
Rate of temperature rise: 50 to 500°C/hour
Cooling rate: 50 to 500°C/hour
Atmosphere: Wet mixed gas of N₂ and H₂ etc.

If the holding temperature is too low, the sintered body becomes insufficiently densified. If the holding temperature is too high, electrode disconnection due to abnormal sintering of the internal electrode layers, deterioration of the capacity-temperature characteristic due to diffusion of the conductive material forming the internal electrode layers, and reduction of the dielectric ceramic composition forming the dielectric layers easily occur.

In the present embodiment, the green chip is preferably fired under a reducing atmosphere. By firing the green chip under a reducing atmosphere, it is possible to prevent oxidation of the base metal included in the internal electrode layers.

The oxygen partial pressure in the air atmosphere at the time of firing a green chip is 10⁻² Pa or less, preferably 10⁻² to 10⁻⁸ Pa. At the time of firing, by controlling the oxygen partial pressure to the above range, it is possible to fire the green chip under a reducing atmosphere. If the oxygen partial pressure at the time of firing is too high, the internal electrode layers tend to be oxidized. Further, if the oxygen partial pressure at the time of firing is too low, the electrode material of the internal electrode layers tend to abnormally sinter and the electrodes to become disconnected.

### (Annealing of Sintered Body)

Next, the obtained sintered body is annealed. The annealing of the sintered body is a step for reoxidation of the dielectric layers. This can increase the insulation resistance.

In the present embodiment, the dew point of the annealing atmosphere gas at the time of annealing the sintered body is preferably -50 to 0°C and the temperature of the annealing atmosphere gas (holding temperature at time of annealing) is 900 to 1100°C.

Further, in the present embodiment, the annealing atmosphere gas preferably includes N₂ and H₂O. By adjusting the ratio of mixture of the N₂ and H₂O in the annealing atmosphere gas, the annealing atmosphere gas is controlled in oxygen partial pressure.

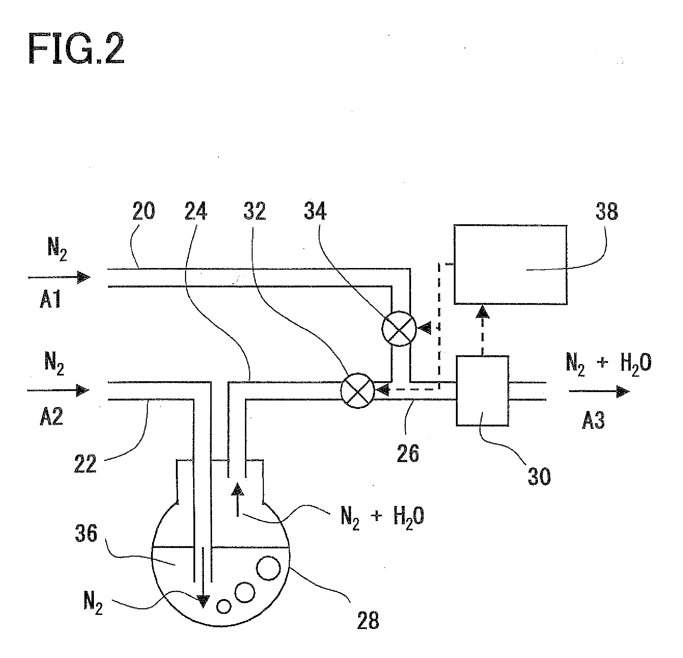

A system for adjusting the ratio of mixture of the N₂ and H₂O in the annealing atmosphere gas to control the dew point of the annealing atmosphere gas (wetter) is illustrated in FIG. 2. The wetter is comprised of gas pipes 20, 22, 24, 26, a liquid reservoir 28, a dew point meter 30, valves 32, 34, and a control means 38.

. N₂ gas is introduced into the gas pipe 20 from the A1 direction. Further, N₂ gas is introduced into the gas pipe 22 from the A2 direction. The N₂ gas introduced to the gas pipe 22 is released from the gas pipe 22 in the water 36 accumulated in the liquid reservoir 28. This N₂ gas is mixed with the H₂O (steam) in the water 36, then introduced into the gas pipe 24. The mixed gas (N₂+H₂O) passing through the gas pipe 24 and valve 32 and the N₂ gas passing through the gas pipe 20 and valve 34 merge at the gas pipe 26 where they are mixed. Due to this mixing, the annealing atmosphere gas is formed. The annealing atmosphere gas flows through the gas pipe 26 and reaches the dew point meter 30.

The dew point meter 30 measures the annealing atmosphere gas for the dew point. The control means 38 detects the dew point of the annealing atmosphere gas measured by the dew point meter 30. Further, the control means 38 controls the dew point measured by the dew point meter 30 to within the predetermined range by adjusting the flow rates of the mixed gas (N₂+H₂O) passing through the valve 32 and the N₂ gas passing through the valve 34. As a result, the ratio of mixture of the mixed gas (N₂+H₂O) fed from the gas pipe 24 and the N₂ gas fed from the gas pipe 20 is adjusted. As a result, the dew point of the annealing atmosphere gas (amount of H₂O included in annealing atmosphere gas) is controlled to within the range of -50 to 0°C. The annealing atmosphere gas passed through the dew point meter 30 flows in the A3 direction and is fed to the annealing system of the sintered body.

The H₂O included in the annealing atmosphere gas undergoes a disassociation reaction to produce O₂ when the annealing atmosphere gas is in a predetermined temperature range. In the annealing (reoxidation step) of the sintered body, this O₂ causes the reoxidation of the dielectric layers of the sintered body. That is, in the present embodiment, the annealing atmosphere gas is adjusted in dew point and temperature to determine the oxygen partial pressure of the annealing atmosphere gas.

Note that the temperature of the water 36 accumulated in the liquid reservoir 28 is preferably 0 to 75°C or so.

### Formation of External Electrodes

Next, the annealed sintered body (capacitor device body 4 of FIG. 1) is printed or transferred with the external electrode paste and fired to form external electrodes 6, 8. The external electrode paste is fired in for example a wet N₂ and H₂ mixed gas in the temperature range of 600 to 800°C for 10 minutes to 1 hour or so. Further, if needed, the surfaces of the external electrodes 4 are formed with covering layers such as plating.

As the external electrodes 6 and 8, it is usually possible to use one or more types of elements of Ni, Pd, Ag, Au, Cu, Pt, Rh, Ru, Ir, etc. or their alloys. Usually, Cu or a Cu alloy, Ni or an Ni alloy, Ag or a Ag-Pd alloy, In-Ga alloy, etc. is used. The external electrodes 6 and 8 are suitably determined in thickness in accordance with the application, but are usually 10 to 200 µm or so. The external electrode paste may be prepared in the same way as the above internal electrode layer paste.

The external electrodes 6 and 8 are formed on the capacitor device body 4, then the multilayer ceramic capacitor 2 of FIG. 1 is obtained. The produced multilayer ceramic capacitor 2 is mounted on a printed circuit board etc. by soldering etc. and used for various types of electronic equipment etc.

In the present embodiment, the dew point of the annealing atmosphere gas may be made -50 to 0°C and the temperature of the annealing atmosphere gas may be made 900 to 1100°C to control the oxygen partial pressure in the annealing atmosphere gas within the range of 1.9x10⁻³ to 5.5x10⁻² Pa. By annealing the sintered body for reoxidation in the range of this oxygen partial pressure, it is possible to prevent a drop in mechanical strength of the multilayer ceramic capacitor and the formation of structural defects such as cracks. Further, control of the dew point and temperature of the annealing atmosphere gas is simple, so compared with annealing under a high pressure atmosphere, it is possible to prevent a multilayer ceramic capacitor from dropping in mechanical strength and causing structural defects such as cracks by a lower cost.

If the annealing atmosphere gas becomes too low in dew point, the annealing atmosphere gas becomes low in oxygen partial pressure. If the annealing atmosphere gas becomes too low in oxygen partial pressure, the dielectric layers are insufficiently reoxidized and the dielectric layers may lose their dielectric properties. As a result, the capacitor becomes shorter in insulation resistance life. Further, if the annealing atmosphere gas becomes too high in dew point, the annealing atmosphere gas becomes higher in oxygen partial pressure. If the annealing atmosphere gas becomes too high in oxygen partial pressure, the sintered body is annealed under a strong oxidizing atmosphere. As a result, the base metal in the internal electrode layers ends up becoming oxidized. By oxidizing the base metal in the internal electrode layers, the internal electrode layers expand in volume. As a result, the multilayer ceramic capacitor becomes lower in mechanical strength and cracks are liable to be formed.

If the annealing atmosphere gas is too low in temperature, the dielectric layers are insufficiently reoxidized and the dielectric layers may lose their dielectric properties. As a result, the capacitor becomes shorter in insulation resistance life. Further, if the annealing atmosphere gas becomes too high in temperature, the dielectric layers are reoxidized well, but even the internal electrode layers end up being oxidized and cracks are liable to form. Further, if the internal electrode layers are oxidized, the capacitor falls in electrostatic capacity. Further, if the annealing atmosphere gas is too high in temperature, the base metal of the internal electrode layer ends up reacting with the dielectric base material and the capacitor tends to become shorter in insulation resistance life.

Further, in the present embodiment, the simplified system shown in FIG. 2 (wetter) may be used to easily control the dew point of the annealing atmosphere gas (oxygen partial pressure in annealing atmosphere gas). As a result, compared with the method of annealing under a high pressure atmosphere etc., it is possible to prevent the multilayer ceramic capacitor from dropping in mechanical strength and causing structural defects such as cracks at a lower cost.

In the multilayer ceramic capacitor 2 of FIG. 1 as a result of production by the method of production of the above embodiment, the amount of Si existing (atomic%) at an interface between an outer dielectric layer 10a and the internal electrode layer 12a positioned at the outer most layer in the stack part 14 becomes 0.5 to less than 2 folds, preferably 0.6 or more to 1.8 or less folds, of the amount of Si existing (atomic%) at the interface between the inner dielectric layer 10 and the internal electrode layer 12.

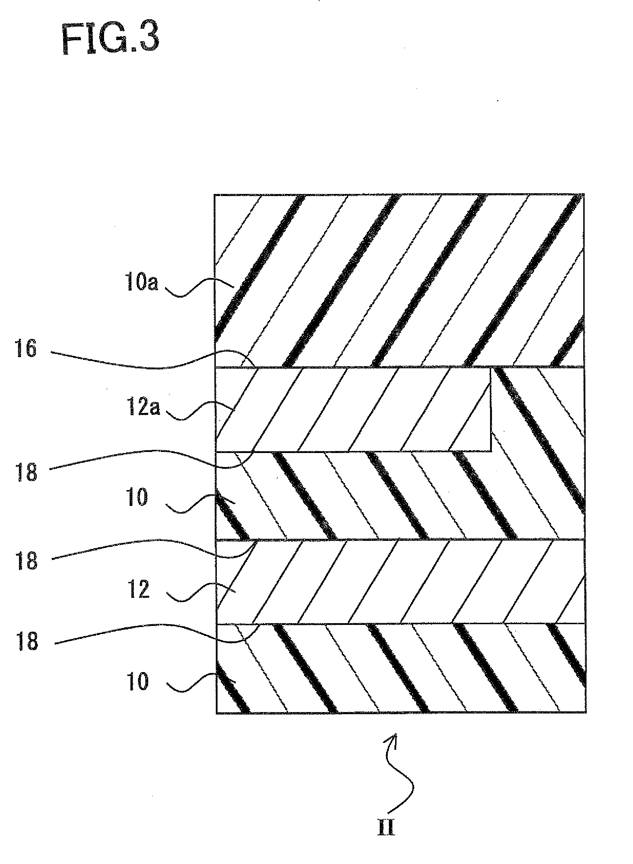

As shown in FIG. 1, the multilayer ceramic capacitor 2 has a stack part 14 comprised of the inner dielectric layers 10 and internal electrode layers 12 stacked up and outer dielectric layers 10a sandwiching the stack part 14 at the two sides in the stacking direction. Further, as shown in FIG. 3 (enlarged view of the internal overlapped electrode edge part II in FIG. 1), in the multilayer ceramic capacitor 2, the outer dielectric layer 10a and the internal electrode layer 12a positioned at each outer most layer side in the stack part 14 contact each other at the interface 16 (outer layer side interface) . Further, the inner dielectric layer 10 and the internal electrode layer 12 contact each other at each interface 18 (inner side interface) . In the present embodiment, by making the amount of presence of Si at the outer layer side interface 16 (hereinafter indicated as Siₒᵤₜ) 0.5 to less than 2 times the amount of presence of Si at the inner layer side interface 18 (hereinafter indicated as Siᵢₙ), preferably 0.6 or more to 1.8 or less, it is possible to improve the multilayer ceramic capacitor in mechanical strength and prevent the formation of structural defects such as cracks.

Hereinbefore, an embodiment of the present invention was explained, but the present invention is not limited to this embodiment in any way. The present invention can be worked in various ways within a range not outside the gist of the present invention. For example, in the above embodiment, a multilayer ceramic capacitor 2 was illustrated as a multilayer ceramic electronic device, but the present invention is not limited to this.

Further, in the above embodiment, the binder removal treatment, firing, and annealing were performed independently, but the present invention is not limited to this. Two or more steps may be performed consecutively.

### EXAMPLES

Hereinbelow, the present invention will be explained based on more detailed examples, but the present invention is not limited to these

### examples.

### Example 1

### (Preparation of Green Sheet)

As shown below, the main ingredient materials and the sub ingredient materials were wet mixed in a predetermined molar ratio by a ball mill for 16 hours, then dried to obtain a dielectric material. Note that the main ingredient materials and the sub ingredient materials had particle sizes of 0.1 to 1.0 µm. BaTiO₃: 100 mol%, MgCO₃: 3.0 mol%, MnCO₃: 0.5 mol%, (Ba_{0.6}Ca_{0.4}) SiO₃: 3.0 mol%, Y₂O₃: 5.0 mol%.

Note that the above-mentioned 3.0 mol% of (Ba_{0.6}Ca_{0.4})SiO₃ was wet mixed with 1.8 mol% of BaCO₃, 1.2 mol% of CaCO₃, and 3 mol% of SiO₂ by a ball mill for 16 hours, then dried and fired at 1150°C in the air, then further wet pulverized by a ball mill for 100 hours.

Next, the obtained dielectric material was mixed and dispersed with a solvent, dispersant, plasticizer, and organic vehicle in a predetermined ratio, then converted to a paste to obtain a dielectric layer paste.

Next, the obtained dielectric layer paste was used to form a green sheet on a PET film.

Next, Ni particles, a solvent, dispersant, plasticizer, and organic vehicle were mixed in a predetermined ratio, kneaded, and converted into a paste to obtain an internal electrode layer paste.

### (Fabrication of Multilayer Capacitor)

First, the above internal electrode layer paste was printed on the green sheet to obtain internal layer stack units. Further, external layer stack units were obtained from a green sheet not printed with any internal electrode layer paste.

Next, the internal layer stack units were stacked to obtain a structure of these units sandwiched by outer layer stack units at the two end faces.

Next, the stack is pressed by a predetermined pressure, then cut to predetermined dimensions to obtain a green chip.

Next, the green chip was treated to remove the binder. The conditions for treatment to remove the binder were a rate of temperature rise: 50°C/hour, a holding temperature: 240°C, a temperature holding time: 8 hours, a cooling rate: 300°C/hour, and an atmosphere: air.

Next, the green chip treated to remove the binder was fired to obtain a sintered body. The firing conditions were a rate of temperature rise: 200°C/hour, a holding temperature: 1240°C, a temperature holding time: 2 hours, a cooling rate: 300°C/hour, and an atmosphere gas: wet N₂+H₂ mixed gas (oxygen partial pressure: 10×10⁻⁷ Pa).

Next, the obtained sintered body was annealed (reoxidation step). The annealing conditions were an annealing atmosphere gas: wet N₂ gas (dew point: -15°C, oxygen partial pressure: 2.2x10⁻² Pa), rate of temperature rise of annealing atmosphere gas: 200°C/hour, annealing temperature (temperature of annealing atmosphere gas): 1050°C, temperature holding time: 2 hours, cooling rate of annealing atmosphere gas: 300°C/hour.

Note that the annealing atmosphere gas at the time of annealing was wetted using a wetter with a water temperature of 20°C.

Next, the end faces of the annealed sintered body were polished by sand blasting, then were coated with an end electrode paste to obtain a sample of the multilayer ceramic capacitor 2 shown in FIG. 1. The obtained sample had a size of 3.2 mm × 1.6 mm × 0.6 mm. The outer dielectric layer 10a had a thickness of 70 µm, the inner dielectric layer 10 had a thickness (interlayer thickness) of 1.5 µm, and the internal electrode layers 12 and 12a had thickness of 1.0 µm.

### Examples 2 to 4 and Comparative Examples 1 to 5

Except for making the dew point of the annealing atmosphere gas the values shown in Table 1, the same procedure was followed as in Example 1 to fabricate multilayer ceramic capacitors.

### Examples 5, 6 and Comparative Examples 6, 7

Except for making the annealing temperature the values shown in Table 1, the same procedure was followed as in Example 1 to fabricate multilayer ceramic capacitors.

### Measurement of Flexural Strength of Sintered Body

The sintered bodies obtained in Examples 1 to 6 and Comparative Examples 1 to 7 were measured for flexural strength (unit: N/mm²) . For the measurement, a load tester (made by Aikoh Engineering) was used. The flexural strength was measured based on the three-point measurement method defined in JIS-R1601. The results are shown in Table 1.

### Measurement of Crack Defect Rate of Multilayer Ceramic Capacitor

The multilayer ceramic capacitors obtained in Examples 1 to 6 and Comparative Examples 1 to 7 were measured for the crack defect rate. The results are shown in Table 1. 10,000 samples of the capacitors were cut open and their cross-sections were examined under microscope to investigate the existence of cracks. Further, the ratio of the number of samples found to have cracks to the total number of samples was defined as the crack defect rate (unit: ppm).

**Table 1**

| | | Dew point (°C) | Annealing temperature (°C) | Oxygen partial pressure (Pa) | Flexural strength (N/mm²) | Crack defect rate (ppm) | Siₒᵤₜ/Siᵢₙ | Overall judgment |
|---|---|---|---|---|---|---|---|---|
| Comp. Ex. 5 | | -55 | 1050 | 1.1 × 10⁻³ | 29.3 | 100 | 0.4 | NG |
| | Ex. 2 | -50 | 1050 | 1.9 × 10⁻³ | 34.0 | 0 | 0.6 | VG |
| | Ex. 3 | -30 | 1050 | 8.6 × 10⁻³ | 35.3 | 0 | 1.0 | VG |
| | Ex. 1 | -15 | 1050 | 2.2 × 10⁻² | 38.4 | 0 | 1. | VG |
| | Ex. 4 | 0 | 1050 | 5.5 × 10⁻² | 33.7 | 0 | 1.8 | VG |
| Comp. Ex. 2 | | 5 | 1050 | 6.9 × 10⁻² | 29.1 | 200 | 2.3 | NG |
| comp. Ex. 3 | | 15 | 1050 | 1.1 × 10⁻¹ | 29.1 | 300 | 4.2 | NG |
| Comp. Ex. 4 | | 30 | 1050 | 2.0 × 10⁻¹ | 24.2 | 600 | 4.7 | NG |
| Comp. Ex. 1 | | 45 | 1050 | 3.5 × 10⁻¹ | 23.2 | 1500 | 8.1 | NG |
| Comp. Ex. 6 | | -15 | 850 | 1.5 × 10⁻³ | 28.6 | 700 | 0.4 | NG |
| | Ex. 5 | -15 | 900 | 3.3 × 10⁻³ | 32.8 | 0 | 0.9 | VG |
| | Ex. 6 | -15 | 1100 | 3.9 × 10⁻² | 38.7 | 0 | 1.6 | VG |
| Comp. Ex. 7 | | -15 | 1150 | 6.5 × 10⁻² | 39.2 | 400 | 2.7 | NG |

### Measurement of Siₒᵤₜ, Siᵢₙ

The multilayer ceramic capacitors obtained in Examples 1 to 6 and Comparative Examples 1 to 7 were measured for the amount of Si existing at the outer layer side (Siₒᵤₜ) at each interface 16 between an outer dielectric layer 10a and the internal electrode layer 12a positioned at the outer most layer side of the stack part 14 shown in FIG. 1 and FIG. 3 and the amount of Si existing at the inner side (Siᵢₙ) at the interface 18 between the inner dielectric layer 10 and the internal electrode layer 12 and the ratio (Siₒᵤₜ/Siᵢₙ) was found. The results are shown in Table 1.

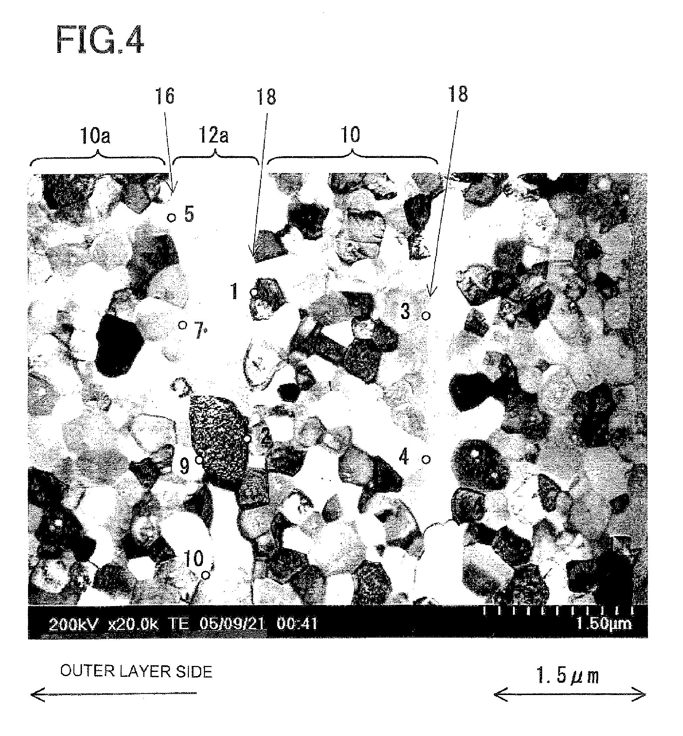

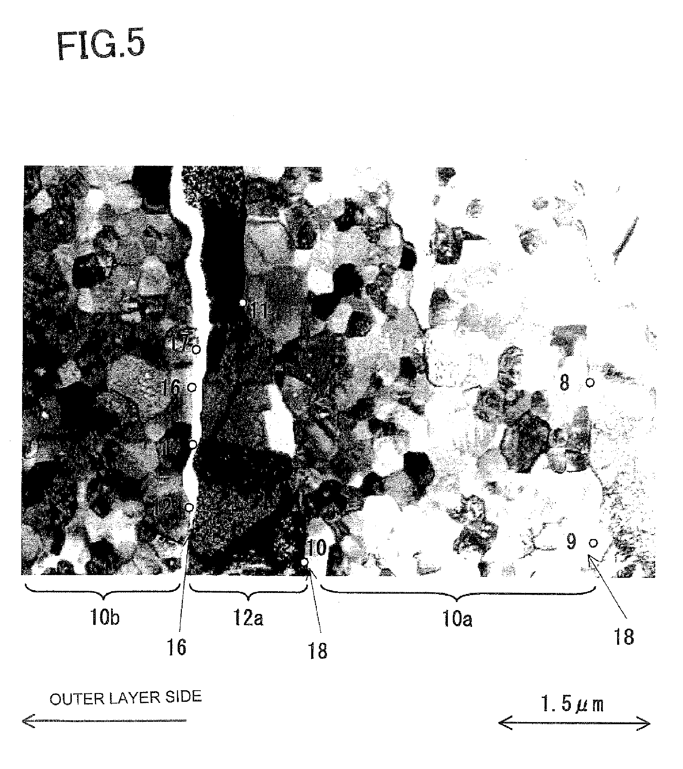

In this measurement, first, as shown in FIG. 1, the multilayer ceramic capacitor was sliced in a direction vertical to the stacked surfaces. Next, the overlapped electrode edge part II of FIG. 1 (that is, the region shown in FIG. 3) was observed by a transmission type electron microscope (TEM) . TEM photographs of the overlapped electrode edge parts II in Example 1 and Comparative Example 1 are shown in FIGS. 4 and 5.

Next, the different measurement points positioned at the outer layer side interfaces 16 and inner layer side interfaces 18 of the overlapped electrode edge parts II were analyzed by TEM-EDS. TEM-EDS analysis was used to measure the amounts of Si existing (atomic%) at the outer layer side interfaces 16 and inner layer side interfaces 18.

For example, in Example 1 (FIG. 4), the measurement points 5, 7, 9, 10 positioned at the outer layer side interface 16 and the measurement points 1, 2, 3, 4 positioned at the inner layer side interface 18 were analyzed by TEM-EDS. In Comparative Example 1 (FIG. 5), the measurement points 12, 13, 16, 17 positioned at the outer layer side interface 16 and the measurement points 8, 9, 10, 11 positioned at the inner layer side interface 18 were analyzed by TEM-EDS.

Next, from the results of TEM-EDS analysis, the amounts of Si element existing at the measurement points (unit: atomic%) were found. Next, the average value (Siₒᵤₜ) of the amounts of Si existing at the different measurement points of the outer layer side interface 16, the average value (Siᵢₙ) of the amounts of Si existing at the different measurement points of the inner layer side interface 18, and the ratio of the same (Siₒᵤₜ/Siᵢₙ) were found. The measurement results in Example 1 are shown in Table 2, while the measurement results in Comparative Example 1 are shown in Table 3. Examples 2 to 6 and Comparative Examples 2 to 7 were measured in the same way as Example 1 and Comparative Example 1.

**Table 2. Example 1 (Dew Point: -15°C)**

| | | Measurement point | | | | | | | |
|---|---|---|---|---|---|---|---|---|---|
| | | Inner layer side interface | | | | Outer layer side interface | | | |
| | | 1 | 2 | 3 | 4 | 5 | 7 | 9 | 10 |
| Amount of Si element existing (atomic%) | | 0.40 | 0.10 | 0.30 | 0.36 | 0.60 | 0.35 | 0.26 | 0.07 |
| Average value of si (atomic%) | Outer layer side interface (Siₒᵤₜ) | | | | | 0.32 | | | |
| | Inner layer side interface (Siᵢₙ) | 0.29 | | | | | | | |
| Siₒᵤₜ/Siᵢₙ | | 1.1 | | | | | | | |

**Table 3. Comparative Example 1 (Dew Point: 45°C)**

| | | Measurement points | | | | | | | |
|---|---|---|---|---|---|---|---|---|---|
| | | Inner layer side interface | | | | Outer layer side interface | | | |
| | | 8 | 9 | 10 | 11 | 12 | 13 | 16 | 17 |
| Amount of Si element existing (atomic%) | | 0.44 | 0.57 | 0.49 | 0.21 | 4.00 | 2.83 | 2.17 | 4.90 |
| Average value of Si (atomic%) | Outer layer side interface (Siₒᵤₜ) | | | | | 3.48 | | | |
| | Inner layer side interface (Siᵢₙ) | 0.43 | | | | | | | |
| Siₒᵤₜ/ Siᵢₙ | | 8.13 | | | | | | | |

### Overall Judgment

The examples and comparative examples were judged overall. When the sintered body had a flexural strength of 30 N/mm² or more, a crack defect rate of 100 ppm or less, and an Siₒᵤₜ/Siᵢₙ of 0.5 to less than 2.0, the overall judgment was "G" (Good). Further, when the sintered body had a flexural strength of 30 N/mm² or more, a crack defect rate of 0 ppm, and an Siₒᵤₜ/Siᵢₙ of 0.5 to less than 2.0, the overall judgment was "VG" (Very Good) . Bodies where these conditions were not satisfied were judged as "NG" (No good) .

### Evaluation

As shown in Table 1, in Examples 1 to 4 where the annealing atmosphere gas in the annealing (reoxidation step) of the sintered body had a dew point of -50 to 0°C, compared with Comparative Examples 1 to 5, it was, confirmed that the sintered body was high in flexural strength and that the capacitor was low in crack defect rate. Further, in Examples 1 to 4, the Siₒᵤₜ/Siᵢₙ was 0.5 to less than 2.0. That is, in a multilayer ceramic capacitor where Siₒᵤₜ/Siᵢₙ is 0.5 to less than 2.0, it was confirmed that the sintered body was high in flexural strength and that the capacitor was low in crack defect rate. Note that in Examples 1 to 4, the annealing atmosphere gas had an oxygen partial pressure of 1.9×10⁻³ to 5.5×10⁻² Pa.

On the other hand, in Comparative Examples 1 to 5, the annealing atmosphere gas had a dew point of less than -50°C or higher than 0°C, so it was confirmed that the sintered body was low in flexural strength and the capacitor was high in crack defect rate. Further, in Comparative Examples 1 to 4, it was confirmed that Siₒᵤₜ/Siᵢₙ was 2 or more, and in Comparative Example 5, Siₒᵤₜ/Siᵢₙ was less than 0.5. That is, in a multilayer ceramic capacitor where the Siₒᵤₜ/Siᵢₙ is less than 0.5, or 2 or more, it was confirmed that the sintered body was low in flexural strength and that the capacitor was high in crack defect rate. Note that in Comparative Examples 1 to 4, when the annealing atmosphere gas had a dew point higher than 0°C, the annealing atmosphere gas had an oxygen partial pressure of 6.9×10⁻² Pa or more. In Comparative Examples 1 to 5, the annealing atmosphere gas had an oxygen partial pressure of 1.1×10⁻³ Pa or less or 6. 9×10⁻² Pa or more.

Further, in Examples 5 and 6 where the annealing atmosphere gas in the annealing (reoxidation step) of the sintered body had a temperature of 900 to 1100°C, compared with Comparative Examples 6 and 7, it was confirmed that the sintered body was high in flexural strength and that the capacitor was low in crack defect rate. Further, in Examples 5 and 6, Siₒᵤₜ /Siᵢₙ was 0. 5 to less than 2. That is, in a multilayer ceramic capacitor where Siₒᵤₜ/Siᵢₙ is 0.5 to less than 2, it was confirmed that the sintered body was high in flexural strength and that the capacitor was low in crack defect rate.

On the other hand, in Comparative Examples 6 and 7, the annealing atmosphere gas had a temperature of less than 900°C or higher than 1100°C, so it was confirmed that the sintered body was low in flexural strength and that the capacitor was high in crack defect rate. Further, it was confirmed that in Comparative Example 6, Siₒᵤₜ/Siᵢₙ was less than 0.5, while in Comparative Example 7, Siₒᵤₜ/Siᵢₙ was 2 or more. That is, in a multilayer ceramic capacitor where Siₒᵤₜ/Siᵢₙ is less than 0.5, or 2 or more, it was confirmed that the sintered body was low in flexural strength and that the capacitor was high in crack defect rate.

While the invention has been described with reference to specific embodiments chosen for purpose of illustration, it should be apparent that numerous modifications could be made thereto by those skilled in the art without departing from the basic concept and scope of the invention.

## Claims

1. A method of production of a multilayer ceramic electronic device comprising
a step of stacking green sheets and internal electrode layers to obtain a green chip,
a step of firing said green chip under a reducing atmosphere to obtain a sintered body, and
a reoxidation step of annealing said sintered body in a predetermined annealing atmosphere gas, wherein
said annealing atmosphere gas in said reoxidation step has a dew point of -50 to 0°C, and
said annealing atmosphere gas in said reoxidation step has a temperature of 900 to 1100°C.

2. The method of production of a multilayer ceramic electronic device as set forth in claim 1, wherein said internal electrode layers include a base metal.

3. The method of production of a multilayer ceramic electronic device as set forth in claim 1 or 2, wherein said annealing atmosphere gas includes N₂ and H₂O.

4. A multilayer ceramic electronic device obtained by the method as set forth in claim 1, 2, or 3.

5. A multilayer ceramic electronic device comprising
a stack part comprising inner dielectric layers and internal electrode layers stacked together and
outer dielectric layers sandwiching the two sides of said stack part in the stacking direction, wherein
the amount of Si existing at an interface between the outer dielectric layer and the internal electrode layer positioned at the outer most side of the stack part is 0.5 to less than 2 times the amount of Si existing at an interface between the inner dielectric layer and the internal electrode layer.

6. The multilayer ceramic electronic device as set forth in claim 5, wherein said internal electrode layers include a base metal.
